# EUROPEAN PATENT SPECIFICATION

(11) **EP 3 133 965 B1**
(45) Date of publication and mention of the grant of the patent: **23.09.2020**
(21) Application number: 15719276.6
(22) Date of filing: 22.04.2015
(51) Int. Cl.: A47J 36/32, A47J 31/52, A47J 43/07, A47J 37/08

(54) **KITCHEN APPLIANCE HAVING CONTACTLESS OPERATION**
KÜCHENGERÄT MIT KONTAKTLOSEM BETRIEB
APPAREIL DE CUISINE AYANT UN FONCTIONNEMENT SANS CONTACT

(30) Priority: 22.04.2014 GB 201407088; 22.04.2014 GB 201407093
(43) Date of publication of application: 01.03.2017
(60) Divisional application: 20188258.6
(73) Proprietor: Kenwood Limited, Havant, Hampshire PO9 2NH (GB)
(72) Inventor: HARVEY, David, Havant Hampshire PO9 2NH (GB); PALMER, Paul, Havant Hampshire PO9 2NH (GB)
(74) Representative: Hector, Annabel Mary
(86) International application number: PCT/GB2015/051188
(87) International publication number: WO 2015/162421

(56) References cited:
- EP-A1- 1 561 409
- WO-A1-2014/083022
- WO-A1-2014/199169
- DE-A1-102010 060 650
- US-A1- 2009 099 691

## Description

This invention relates to kitchen appliance such as a stand mixer device or toaster and, more particularly, to a control and display for such an appliance.

A stand mixer is a multipurpose kitchen appliance which helps and reduces physical work required while food preparation and cooking. The stand mixer is a motor-driven kitchen machine which is used to mix, or otherwise process, ingredients in a bowl by means of planetary movement of one or more shanked tools which extend into the bowl from a head unit that carries a downwardly-facing drive outlet, powered by the motor, to which the shank, or shanks, of the tool, or tools are fitted. Historically, stand mixers offered mechanical controls such as knobs and, switches. However, consumers using these devices found the mechanical controls inconvenient to operate. The mechanical controls often get very hard and consumers have to put in additional manual effort to operate the mechanical controls. Further, due to the flexibility in the variety of the tools and attachments offered by the equipment, the equipment itself is quite heavy. Therefore, the usage of these stand mixers for daily cooking is quite difficult due to head lift and tool change requirements, which would require physical power.

There is also a need to operate kitchen appliances like stand mixers when hands are dirty and to maintain hygiene while cooking.

Historically, toasters offered mechanical controls such as knobs and switches. However, consumers using these devices found the mechanical controls inconvenient to operate. For example, the mechanical controls often get very hard and consumers have to put in additional manual effort to operate the mechanical controls. In addition, a toaster cooks bread by passing an electric current through a heating element. The heat generated by the element also causes the toaster to become hot. Therefore, touching the toaster may cause discomfort or burns.

Infrared (IR) based remote controls and touch sensitive input methods are known, which allowed the consumers to operate the devices through these controls, which could be operated from within a specific distance from the devices. However, these controls also have certain disadvantages such as operating the remote controls in the dark is not possible and also it is uncomfortable to operate using these touch based controls while cooking in the kitchen or while dining.

The invention seeks to alleviate at least some of the aforementioned problems.

Gesture control technology is also known in art. The technology helps users to operate these devices using gestures without touching any control. The technology has been used in the entertainment devices (televisions, laptops) or automobiles.

It is known that by using motion sensors/detectors, consumers may operate television, lights or other devices by recognizing the presence of a person. However, this method was disadvantageous as these actions had to be configured and changed manually to adjust to the specific user requirements, as they were not dynamic. Further, these sensors only worked on a binary sensing means to operate or not.

Document US-A-2009/0099691 discloses a cooking assistance robot having means for recognizing voice uttered by the user and the gesture of the user.

In view of the problems and the shortcomings of the existing solutions, the present invention includes a system of recognising user commands without the user being in physical contact with the machine controls. This is achieved through gesture control and/or voice control. More specifically, the invention aims to mitigate the existing problems around the implementation of such solutions within the home environment for appliances.

Having a gesture controlled kitchen appliance can give extra flexibility, for example in addition to the already existing multi-use feature of a stand mixer. However, the implementation of such gesture control technology in a kitchen environment or small household equipment has unique demands to realise the technology with efficiency and without interference.

This invention may provide a gesture control unit that provides contactless control using hand motions. Since the user may operate stand mixer by no contact means, it alleviates any discomfort. Gesture control may also simplify the user interface. Instead of having controls requiring rotation or pushing, simple hand motions can achieve the same objective.

Furthermore, for example since a user may operate a toaster by no contact means, it alleviates the risk of any discomfort or burning.

Further, the invention may provide a dial in mode for security. This allows a user to opt when to use voice and gesture controlling and when to use manual controls providing security for example at homes when children are around.

In one aspect, the invention provides a kitchen appliance comprising a stand mixer or comprising a toaster, the appliance having contactless operating capability. The kitchen appliance comprises a controller for controlling operation of the kitchen appliance; a sensor for capturing data related to a signal performed by a user; and a processor for processing the captured data. The processor is configured to map the signal performed by the user with a known signal using the captured data and a signal database maintaining data related to a plurality of known signals, determine a command associated with the known signal using a commands database maintaining data related to a plurality of commands, and send the associated command to the controller. The controller also controls a display unit configured to display an image related to the signal performed by the user.

The appliance may also comprise a signal control unit for remote controlling the kitchen appliance, wherein the signal control unit comprises: a command database maintaining data related to a plurality of commands, wherein each command corresponds to a specific function of the kitchen appliance; a signal database maintaining data related to a plurality of known signals; a sensing unit for capturing data related to a signal performed by a user; a processing unit for processing the captured data, wherein the processing unit is configured to map the signal performed by the user with a known signal using the captured data and the signal database and determine a command associated with the known signal using the command database; and a command processing unit for sending the associated command to the kitchen appliance.

A signal may comprise a gesture or a sound such as a voice command.

The appliance may be a stand mixer, each command corresponding to a specific function of the stand mixer; the stand mixer having control circuitry for receiving the associated command and performing the associated function, wherein the function may be one of switching on/off one or more of a high-speed blender drive outlet, a slow-speed mincer drive outlet and a planetary drive outlet; selecting speed of operation; and selecting a tool for the planetary drive outlet. The tool may be one of a beater, a whisk, a dough hook and a spatula.

The appliance may alternatively be a toaster, wherein each command corresponds to a specific function of the toaster; the toaster having control circuitry for receiving the associated command and performing the associated function, wherein the function may be one of initiating a toasting cycle, adjusting a browning control, selecting one or more of a one-slice setting, a bagel setting, a defrost setting, a reheat setting and a stopping a toasting cycle.

As referred to herein, a 'gesture' should be taken to refer to a movement of a user's body.

Technical advantages of particular embodiments include the ability of the appliance to detect gestures and perform different functions, operations or tasks. The gestures may be mapped to a large number of commands by using a display to show the various user selectable functions. Accordingly, the functionality of the device may be increased.

Other technical advantages will be readily apparent to one skilled in the art from the following figures, descriptions and claims. Moreover, while specific advantages have been enumerated above, various embodiments may include all, some or none of the enumerated advantages.

In order that the invention may be clearly understood and readily carried into effect, certain embodiments thereof will now be described, by way of example only, with reference to the accompanying drawings, of which:
Figure 1 shows, in perspective view, one example of a stand mixer of the invention;
Figure 2 shows another perspective view of the stand mixer of the invention;
Figure 3 is a block diagram of a gesture-based control system according to the present invention;
Figure 4 is a block diagram of a gesture-based control system;
Figure 5 is a flowchart of a method for controlling a stand mixer according to the present invention;
Figure 6 illustrates images of different hand gestures that may be used to operate a stand mixer according to the present invention; and
Figure 7 shows, in perspective view, one example of a toaster of the invention.

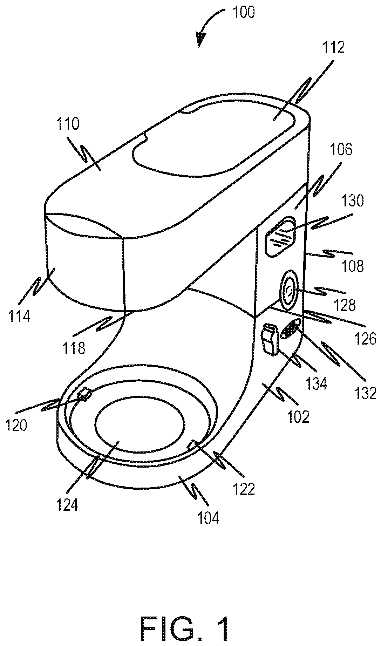

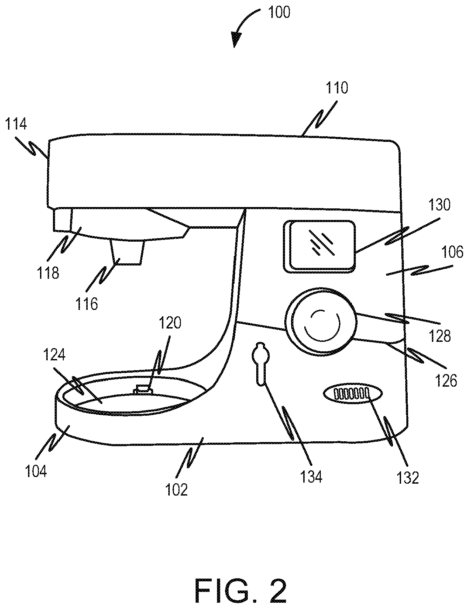

Referring now to Figures 1 and 2, in which corresponding features carry the same reference numbers, the stand mixer 100 comprises a pedestal 102 which supports a bowl platform 104 and a housing 106. The housing 106 encloses, either in an upright casing part 108 or in a header unit 110, an electric drive motor and gearing (neither shown) which provides motive power to a plurality of drive outlets to which various tools can be attached to perform a wide variety of tasks in the kitchen.

In this particular example, there is provided a high-speed blender drive outlet behind covers 112, a slow-speed mincer drive outlet behind cover 114 and a planetary drive outlet 116, disposed beneath a gearbox casing 118; the planetary drive being intended for food mixing and thus being disposed overhead of the bowl location. It will readily be appreciated, however, that more, fewer and/or different drive outlets can be provided in accordance with desired functionality of the stand mixer.

A shanked mixing tool, attached as is conventional, to a socket comprised in the planetary drive outlet 116, will depend in use into a mixing bowl placed on the bowl platform 104, and is configured to rotate about both the axis of the planetary drive outlet 116 and a central axis, thus performing a planetary mixing action. The tool may be one of a beater, such as a K-beater, a whisk, a dough hook and a spatula. The beater may be used for making cakes, biscuits, pastry, icing, fillings, eclairs and mashed potato. The whisk may be used for eggs, cream, batters, fatless sponges, meringues, cheesecakes, mousses, and souffles. The dough hook may be used for yeast mixtures. The necessary relationships between the relative shapes and dimensions of the bowl and the mixing tool to ensure thorough and repeatable mixing of ingredients are well known and established in use over many years.

As shown in Figures 1 and 2, the stand mixer 100 is, in this example, provided with a pair of latches 120, 122 within a recess 124 provided in the bowl platform 104, which latches cooperate with components on the base of the bowl to form a bayonet latching system which ensures firm and ready location of the bowl on its platform. Other latching systems, such as screw-threading for example, can be used as an alternative to bayonet latching if preferred.

The upright part 108 of the housing 106 is configured with a break line 126, to permit the header part 110 of the stand mixer to be hinged away from the bowl platform 104 end of the pedestal part 102, in order to facilitate the insertion and removal of the mixing tools and the bowl.

In the pedestal 102, beneath the bowl platform 104, is provided a heating means (not shown) capable of generating sufficient heat to cook ingredients in the bowl. Typically, and indeed preferably, the bowl is of metal and the heating means comprises an inductive heater. Alternative or additional heating technologies can be employed, however, such as thick film heaters, halogen heaters and suitably configured sheathed resistance heaters.

If desired, the heating means may comprise relatively low and relatively high wattage settings, to enable the stand mixer arrangement to be used for slow cooking as well as for attended cooking programmes. It will be appreciated that, in such circumstances, the relatively low wattage setting may be provided by energising just a portion of a relatively high wattage heater element. Alternatively, the lower wattage may be provided by a separate element, or by cyclic interruption of the power to a single element.

The stand mixer 100 also incorporates a sensor 128 located on the exterior surface at one side of the housing 106. The sensor 128 is arranged to capture data of or relating to a gesture performed by a user in a predetermined region near the stand mixer 100. The sensor 128 may be configured to capture one or more of a video signal, an audio signal, an infrared signal, an electric field signal or like.

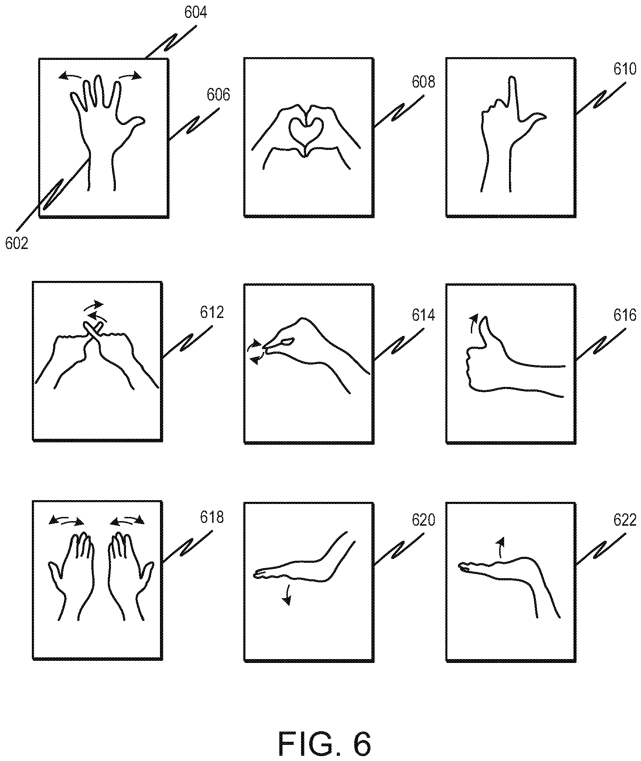

A gesture performed by the user may include a specific motion performed by a user's hand in a specific configuration. Some examples of gestures performed by the user are explained in conjunction with Figure 6 below. In an alternate embodiment, the sensor 128 is available on a smart communication device (example, mobile phone, table and like). The smart communication device receives data from the sensor 128, and wirelessly communicates the same to the stand mixer 100. Accordingly, the stand mixer 100 is capable of wirelessly communicating with the smart communication device. Further, the smart communication device may also process the data to determine the user command.

The user may perform gestures corresponding to one or more available functions: switching on/off one or more of a high-speed blender drive outlet, a slow-speed mincer drive outlet and a planetary drive outlet; selecting speed of operation; and selecting a tool for the planetary drive outlet, wherein the tool is one of a beater, a whisk, a dough hook and a spatula. Further, pre-stored settings may be activated using gestures. For example, for using the beater for creaming fat and sugar, the pre-stored setting may be start on minimum speed (min.) and then gradually increasing to maximum speed (max). For beating eggs into creamed mixtures 4, the pre-stored setting may be to start and keep the speed at max. For folding in flour, fruit etc, the pre-stored setting may be to start and keep the speed at value "1". For cakes, the pre-stored setting may be to start on min speed and gradually increase to max. Similarly, for using the whisk, the pre-stored setting may be to start and keep the speed at max and for using the dough hook, the pre-stored setting may be to start on min and gradually increased the speed to value "1". In another embodiment, the various tools may be included in the housing 106, wherein based on a gesture performed by a user, a specific tool may be automatically pulled out of the housing 106 and placed in the position for operation.

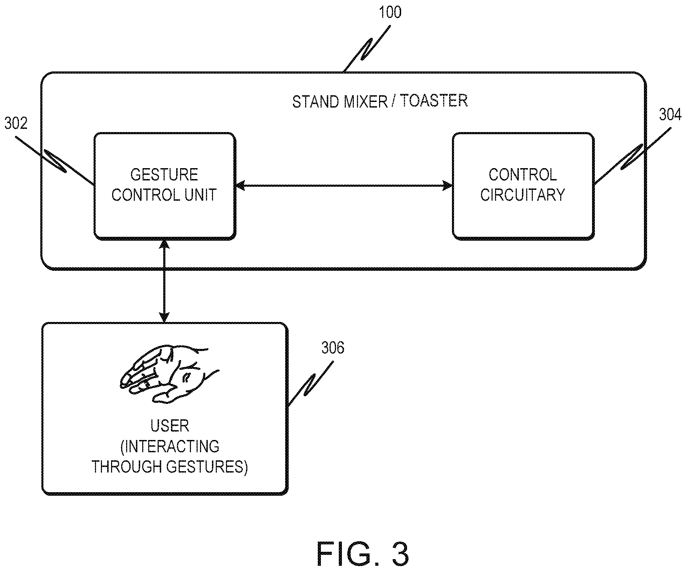

The output of the sensor 128 is coupled to a processor for receiving the sensor input and performing gesture recognition. The processor can be configured to map motion corresponding to the gesture performed by the user with a known gesture using a gesture database maintaining a plurality of gestures, and then map the known gesture to an associated command using a command database maintaining a plurality of commands and then sending the associated command for performing the associated function. This is explained in further detail in conjunction with Figures 3, 4, and 5 below.

The stand mixer 100 may further include a display 130 to provide feedback to the user about a detected gesture. The stand mixer 100 may also include one or more LEDs 132 to provide feedback to the user about a detected gesture. The stand mixer 100 may further include one or more manual controls 134 that may be used as an alternative to the gesture control, or as an override.

The sensor 128 may be further configured to capture a voice command given by a user 306. Accordingly, the processor is configured to map a voice command given by the user 306 with a known voice command using a voice command database maintaining a plurality of voice commands, wherein the commands database 404 includes the voice command database. Further, the stand mixer 100 may further include a dial in mode that allows the user to select one or more of gesture controlling, voice controlling and manual controlling.

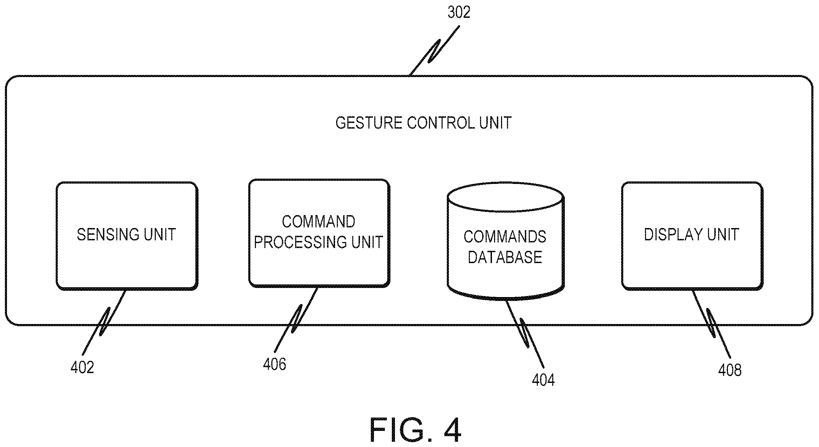

Referring now to Figures 3 and 4, the stand mixer 100 includes the gesture control unit 302 interacts with a control circuitry 304. The gesture control unit 302 can be configured to detect a gesture and send a corresponding command to the control circuitry 304 to execute the corresponding function. A user 306 interacts with the stand mixer 100 by performing gestures.

The gesture control unit 302 further includes other enabling blocks including the sensing unit 402, the commands database 404 and the command processing unit 406. The commands database 404 maintains a plurality of commands corresponding to a plurality of gestures. Each command corresponds to a specific function of the stand mixer 100. The commands database 404 further comprises a gesture database maintaining a plurality of the gestures. Each gesture in the gesture database is defined by a trajectory of a user's hand. Alternatively, the gesture database may be part of the commands database 404.

The sensing unit 402 receives data captured by the sensor 128. The data corresponds to a gesture performed by the user 306. Then, the sensing unit 402 maps motion corresponding to the gesture performed by the user 306 with a known gesture using the gesture database. Accordingly, the sensing unit 402 is configured to analyze signals in the captured data for possible use of a user hand within it, and when a hand is detected, it follows the hand to record a trajectory, wherein the recorded trajectory is compared with trajectories stored in the gesture database to detect the known gesture corresponding to the gesture performed by the user 306.

The gesture control unit 302 may further include a display unit 408 that sends information relating to the detected motion to the display 130. This provides a feedback to the user 306 that helps the user 306 to perform the gesture correctly.

Next, the sensing unit 402 maps the known gesture to an associated command using the commands database 404. Based on the match, the command processing unit 406 sends the associated command to the control circuitry 304. Finally, the control circuitry 304 executes the command to perform a suitable action as desired by the user 306. Additionally, the executed commands may be displayed through the display unit 408 integrated with the gesture control unit 302.

In an alternate embodiment of the present disclosure, the display 130 shows available functions. The user 306 moves a cursor on the display 130 by performing a known gesture to select an available function. For example, the user 306 may move an open hand to move the cursor on the display 130 and select an available function. Once the cursor is in the right position, the user 306 may perform another gesture to activate the selected function.

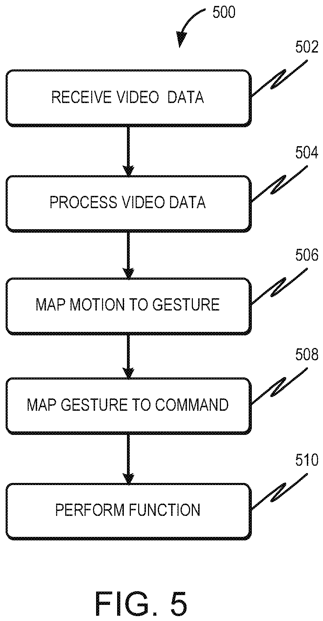

Referring now to Figure 5, there is shown a flowchart 500 illustrating a gesture control process utilizing a number of features described herein, in accordance with a particular embodiment. At step 502, raw data of a particular gesture movement performed by the user 306 is received. The raw data is processed at step 504, where the actual trajectory is determined. At step 506, the determined trajectory is mapped to a known gesture in the gesture database. For example, a detected hand motion may be mapped to a gesture involving a hand wave gesture. Further, mapping the trajectory to a gesture may include accessing a user settings database, which may include user data comprising, for example, user precision and noise characteristics or thresholds, user-created gestures and any other user-specific data including user identities. User-specific information allows different users of the stand mixer 100 to have different settings and motion input characteristics. For example, a child may have less precision than an adult when inputting gestures such that the child may have fewer gestures available. Moreover, a more experienced user may have more functions available through gesture input.

At step 508, the sensed action or gesture is mapped to an associated command. This step may include accessing the commands database 404, which may include correlation between gestures and commands. Further, different users may have different mappings of gestures to commands and different user-created commands. Thus, the commands database 404 may also include user-specific mapping instructions or characteristics, user-created functions and any other function information which may be applicable to map a particular gesture to one or more commands. The commands database 404 may further include user identities to identify users providing gestures and selecting appropriate commands. At step 510, the control circuitry 304 executes the appropriately-mapped one or more commands to perform a suitable function as desired by the user 306.

Figure 6 illustrates some exemplary gestures that may be stored in the gesture database of the present invention. For example, to trigger the gesture control unit 302 to initialize, a hand 602 may be raised in a region within the field of view 604 of the sensor 128 and a hand wave gesture 606 may be performed for 2 to 5 seconds.

Once the system is initialized, the user 306 may perform one or more gestures including a heart-shaped hand gesture 608, a right-angle-shaped hand gesture 610, a cross finger gesture 612, a hand rotating a knob gesture 614, a thumbs-up gesture 616, a clapping hands gesture 618, an open hand pushing-down gesture 620 and an open hand pushing-up gesture 622. Each of the gestures 606-622 may correspond to one or more functions of the stand mixer 100.

Alternatively, an open hand may be used to control a cursor via tracking free hand movement (the cursor is visible on the display 130). The display 130 shows various available functions. The user 306 moves a cursor on the display 130 by performing a known gesture to select an available function. The user 306 may select the appropriate function by moving the hand and placing the cursor on the setting on the display 130. Thereafter, the user 306 may perform press and release to activate the setting. For example, holding an open hand over the appropriate setting, pressing forward until the function is selected and releasing by pulling back slightly to complete the activation.

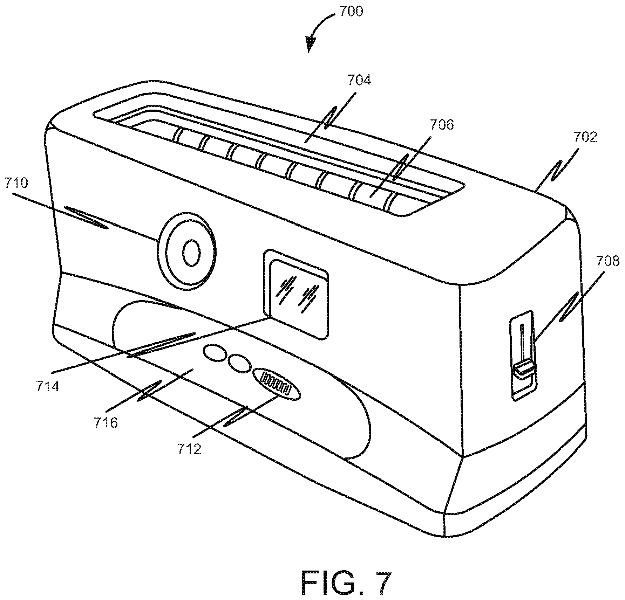

Referring to Figure 7, a toaster 700 in accordance with the present invention has a box-like exterior body 702 that includes an opening 704, positioned on the top surface of body 702. The opening 704 allows slices of bread to be placed into a bread holder 706. The toaster 700 may have two or more openings for toasting two or more slices of bread. The toaster 700 may further include a lever 708 that enables the lowering of bread placed into the bread holder 706 into a toasting chamber and initiating a toasting cycle. Alternatively, the bread placed in the bread holder 706 may be lowered into toasting chamber by performing a gesture.

A sensor 710 located on the exterior surface at one side of body 702. The sensor 710 is arranged to capture data of or relating to a gesture performed by a user in a predetermined region near the toaster 700. The sensor 710 is configured to capture one or more of video, audio, infrared, electric field or like.

The user may perform gestures corresponding to one or more available functions, for example: initiating a toasting cycle, adjusting brownness, selecting one or more of a one-slice setting, a bagel setting, a defrost setting, a reheat setting and a stopping a toasting cycle.

These functions may for example work as follows. The browning control allows a user to set desired toast color from light to dark. When a light toast color is selected, the length of toasting cycle is shortened and when a dark toast color is selected, the length of toasting cycle is lengthened. The one-slice setting allows a user to toast one-slice of bread, which requires less time to toast than two slices of bread. When selected, the length of the toasting cycle is decreased accordingly. The bagel setting allows a user to toast bagels in the toaster 100. Bagels require more toasting time as they have greater density than normal slices of bread. Therefore, when selected, the length of the toasting cycle is increased from default setting for two-slice bread. Although the bagel setting is employed for toasting bagels, it can also be used when toasting other bread-like foods that require a toasting time similar to a bagel. The defrost setting allows a user to toast frozen bread slices, which will require additional time to defrost and toast. Therefore, when selected, the length of the toasting cycle is increased from a default setting. The reheat setting allows a user to reheat a toasted slice of bread in the toasting chamber without additional browning or toasting. When selected, the toasting cycle is set to a predetermined time appropriate for reheating toasted bread. The stop toasting setting allows the user to stop an in-progress toasting cycle.

The output of the sensor 710 is coupled to a processor for receiving the sensor input and performing gesture recognition. The processor can be configured to map motion corresponding to the gesture performed by the user with a known gesture using a gesture database maintaining a plurality of gestures, before mapping the known gesture to an associated command using a command database maintaining a plurality of commands and then sending the associated command for performing the associated function. This is explained in further detail in conjunction with Figures 3, 4 and 5 above.

The toaster 700 may further include LEDs 712 and a display 714 to provide feedback to the user about a detected gesture. The toaster 700 may further include one or more buttons 716 that may be used as an alternative to the gesture control, or as an override.

Once the system is initialized, the user 306 may perform one or more gestures illustrated in Figure 6. Each of the gestures 606-622 may correspond to one or more functions including initiating a toasting cycle, adjusting a browning control, selecting one or more of a one-slice setting, a bagel setting, a defrost setting, a reheat setting and a stopping a toasting cycle. For example, the thumbs-up gesture 616 may correspond to initiate a toasting cycle and the hand rotating a knob gesture 614 corresponds to adjusting a browning control. Further, the open hand pushing-down gesture 620 may correspond to pushing bread placed into the bread holder 706 into the toasting chamber and the open hand pushing-up gesture 622 may correspond to lifting bread out of the toasting chamber.

It will be understood that the present invention has been described above purely by way of example, and modifications of detail can be made within the scope of the invention, which is determined by the appended claims.

Reference numerals appearing in the claims are by way of illustration only and shall have no limiting effect on the scope of the claims.

## Claims

1. A kitchen appliance comprising a stand mixer having contactless operating capability, the stand mixer having a plurality of drive outlets including a planetary drive outlet, and comprising:
a controller for controlling an operation of the stand mixer;
a sensor for capturing data related to a signal comprising a gesture or sound performed by a user;
a display unit configured to display an image related to the signal performed by the user, wherein the controller is configured to control the display unit; and
a processor for processing the captured data, wherein the processor is configured to:
map the signal performed by the user with a known signal using the captured data and a signal database maintaining data related to a plurality of known signals;
determine a command associated with the known signal using a commands database maintaining data related to a plurality of commands; and
send the associated command to the controller for controlling the operation.

2. A kitchen appliance comprising a toaster having contactless operating capability, the toaster comprising:
a controller for controlling an operation of the toaster;
a sensor for capturing data related to a signal comprising a gesture or sound performed by a user;
a display unit configured to display an image related to the signal performed by the user, wherein the controller is configured to control the display unit; and
a processor for processing the captured data, wherein the processor is configured to:
map the signal performed by the user with a known signal using the captured data and a signal database maintaining data related to a plurality of known signals;
determine a command associated with the known signal using a commands database maintaining data related to a plurality of commands; and
send the associated command to the controller for controlling the operation.

3. The kitchen appliance of claim 1 or 2, wherein the display unit is configured to display available functions of the kitchen appliance, and wherein the command is one of: a movement of a cursor on the display unit and a selection of an available function.

4. The kitchen appliance of claim 3, wherein each command corresponds to a specific function of the kitchen appliance.

5. The kitchen appliance of claim 1 or claim 3 or 4 when dependent upon claim 1, wherein the function is one of: switching on/off one or more of a high-speed blender drive outlet, a slow-speed mincer drive outlet and a planetary drive outlet; selecting a speed of an operation; and selecting a tool for the planetary drive outlet.

6. The kitchen appliance of claim 2 or claim 3 or 4 when dependent upon claim 2, wherein the function is one of: initiating a toasting cycle; adjusting a browning control, stopping a toasting cycle; and selecting one or more of a one-slice setting, a bagel setting, a defrost setting, and a reheat setting.

7. The kitchen appliance of any preceding claim, wherein the signal performed by the user comprises a sound, such as a voice command.

8. The kitchen appliance of any of claims 1 to 7, wherein the signal performed by the user comprises a gesture, such as a specific motion performed by the user's hand.

9. The kitchen appliance of claim 8, wherein the plurality of known signals comprise two or more of: a hand wave gesture, a heart-shaped hand gesture, a right-angle-shaped hand gesture, a cross finger gesture, a hand gesture mimicking rotating a knob , a thumbs-up or a thumbs-down gesture, a clapping hands gesture, a pushing forward gesture, a pulling backward gesture, an open hand pushing-down gesture and an open hand pushing-up gesture.

10. The kitchen appliance of any of claims 8 or 9, wherein each signal in the signal database is defined by a trajectory of a user's hand.

11. The kitchen appliance of claim 10, wherein the data related to a plurality of known signals comprises data related to possible trajectories of a user's hand, and wherein the processor is configured to detect the possible use of a user's hand and record a trajectory of the hand when a hand is detected, wherein the recorded trajectory is compared with data related to possible trajectories of a user's hand to detect the known signal corresponding to the signal performed by the user.

12. The kitchen appliance of any preceding claim, wherein the data related to a plurality of known signals comprises a plurality of sets of known expressions, and/or the data related to a plurality of commands comprises a plurality of sets of commands, and wherein different sets of known expressions and/or commands are available in dependence on the identity of the user of the kitchen appliance.

13. The kitchen appliance of any preceding claim, wherein the sensor captures data within a predetermined region near the kitchen appliance, and/or
wherein the sensor is located on a side face of the kitchen appliance.

14. The kitchen appliance of any preceding claim, wherein the kitchen appliance has a mode that allows the user to select control modes from one or more of gesture control, voice control and manual control.

15. The kitchen appliance of any preceding claim, comprising a signal control unit for remote controlling a kitchen appliance, wherein the signal control unit comprises:
a command database maintaining data related to a plurality of commands, wherein each command corresponds to a specific function of the kitchen appliance;
a signal database maintaining data related to a plurality of known signals; wherein the sensor is a sensing unit provided in the signal control unit; and wherein the processor is
a processing unit provided in the signal control unit, wherein the processing unit is configured to:
map the signal performed by the user with a known signal using the captured data and the signal database; and
determine a command associated with the known signal using the command database; and comprises
a command processing unit for sending the associated command to the kitchen appliance.

16. The kitchen appliance of claim 15, wherein the signal control unit is provided in a smart communication device, wherein the smart communication device may wirelessly communicate with the kitchen appliance.

## Patentansprüche

1. Küchengerät, aufweisend einen Standmischer mit kontaktloser Betriebsfähigkeit, wobei der Standmischer eine Vielzahl von Antriebsauslässen einschließlich eines Planetenantriebsauslasses aufweist, und ferner ausweist:
einen Controller zur Steuerung des Betriebs des Standmischers;
einen Sensor zur Erfassung von Daten, die sich auf ein Signal beziehen, das eine Geste oder einen Ton eines Benutzers umfasst;
eine Anzeigeeinheit, die so konfiguriert ist, dass sie ein Bild anzeigt, das sich auf das vom Benutzer ausgeführte Signal bezieht, wobei der Controller so konfiguriert ist, dass er die Anzeigeeinheit steuert; und
einen Prozessor zur Verarbeitung der erfassten Daten, wobei der Prozessor so konfiguriert ist, dass er:
das vom Benutzer durchgeführte Signal mit einem bekannten Signal abbildet, wobei die erfassten Daten und eine Signaldatenbank verwendet werden, die Daten in Bezug auf eine Vielzahl von bekannten Signalen enthält;
einen dem bekannten Signal zugeordneten Befehl bestimmt, wobei eine Befehlsdatenbank verwendet wird, die Daten in Bezug auf eine Vielzahl von Befehlen enthält; und
den zugehörigen Befehl an den Controller sendet, um den Vorgang zu steuern.

2. Küchengerät, aufweisend einen Toaster mit kontaktloser Betriebsfähigkeit, wobei der Toaster aufweist:
einen Controller zur Steuerung eines Betriebs des Toasters;
einen Sensor zur Erfassung von Daten, die sich auf ein Signal beziehen, das eine Geste oder einen Ton eines Benutzers umfasst;
eine Anzeigeeinheit, die so konfiguriert ist, dass sie ein Bild anzeigt, das sich auf das vom Benutzer ausgeführte Signal bezieht, wobei der Controller so konfiguriert ist, dass er die Anzeigeeinheit steuert; und
einen Prozessor zur Verarbeitung der erfassten Daten, wobei der Prozessor so konfiguriert ist, dass er:
das vom Benutzer durchgeführte Signal mit einem bekannten Signal abbildet, wobei die erfassten Daten und eine Signaldatenbank verwendet werden, die Daten in Bezug auf eine Vielzahl von bekannten Signalen enthält;
einen dem bekannten Signal zugeordneten Befehl bestimmt, wobei eine Befehlsdatenbank verwendet wird, die Daten in Bezug auf eine Vielzahl von Befehlen enthält; und
den zugehörigen Befehl an den Controller sendet, um den Vorgang zu steuern.

3. Küchengerät nach Anspruch 1 oder 2, wobei die Anzeigeeinheit dazu konfiguriert ist, verfügbare Funktionen des Küchengeräts anzuzeigen, und wobei der Befehl einer der folgenden ist: eine Bewegung eines Cursors auf der Anzeigeeinheit und eine Auswahl einer verfügbaren Funktion.

4. Küchengerät nach Anspruch 3, wobei jeder Befehl einer bestimmten Funktion des Küchengeräts entspricht.

5. Küchengerät nach Anspruch 1 oder den Ansprüchen 3 oder 4 falls abhängig von Anspruch 1, wobei die Funktion eine der folgenden ist: Ein-/Ausschalten eines oder mehrerer Hochgeschwindigkeits-Mischer-Antriebsauslasses, eines Niedriggeschwindigkeits-Häckslers-Antriebsauslasses und eines PlanetenAntriebsauslasses; Auswählen einer Geschwindigkeit eines Betriebs; und Auswählen eines Werkzeugs für den Planeten-Antriebsauslass.

6. Küchengerät nach Anspruch 2 oder den Ansprüchen 3 oder 4 falls abhängig von Anspruch 2, wobei die Funktion eine der folgenden ist: Initiieren eines Toastzyklus; Anpassen einer Bräunungssteuerung, Stoppen eines Toastzyklus; und Auswählen einer oder mehrerer von einer Ein-Scheiben-Einstellung, einer Bagel-Einstellung, einer Auftau-Einstellung und einer Aufwärm-Einstellung.

7. Das Küchengerät nach einem der vorhergehenden Ansprüche, wobei das vom Benutzer durchgeführte Signal einen Ton, wie einen Sprachbefehl, aufweist.

8. Küchengerät nach einem der Ansprüche 1 bis 7, wobei das vom Benutzer durchgeführte Signal eine Geste, wie eine bestimmte Bewegung, die von der Hand des Benutzers durchgeführt wird.

9. Küchengerät nach Anspruch 8, wobei die Mehrzahl der bekannten Signale zwei oder mehr der folgenden Signale aufweist: eine Handwellengeste, eine herzförmige Handgeste, eine rechtwinklige Handgeste, eine Kreuzfingergeste, eine Handgeste, die das Drehen eines Knopfes nachahmt, eine Daumen-hoch- oder Daumen-runter-Geste, eine Händeklatsch-Geste, eine Vorwärtsschub-Geste, eine Rückwärtszieh-Geste, eine Offene-Hand-drück-runter-Geste und eine Offene-Hand-drück-hoch-Geste.

10. Küchengerät nach einem der Ansprüche 8 oder 9, wobei jedes Signal in der Signaldatenbank durch eine Trajektorie der Hand eines Benutzers definiert ist.

11. Küchengerät nach Anspruch 10, wobei die Daten, die sich auf eine Vielzahl von bekannten Signalen beziehen, Daten aufweisen, die sich auf mögliche Trajektorien der Hand eines Benutzers beziehen, und wobei der Prozessor so konfiguriert ist, dass er die mögliche Verwendung der Hand eines Benutzers erkennt und eine Trajektorie der Hand aufzeichnet, wenn eine Hand erkannt wird, wobei die aufgezeichnete Trajektorie mit Daten verglichen wird, die sich auf mögliche Trajektorien der Hand eines Benutzers beziehen, um das bekannte Signal zu erkennen, das dem vom Benutzer ausgeführten Signal entspricht.

12. Küchengerät nach einem der vorhergehenden Ansprüche, wobei die Daten, die sich auf eine Vielzahl von bekannten Signalen beziehen, eine Vielzahl von Sätzen von bekannten Ausdrücken aufweisen, und/oder die Daten, die sich auf eine Vielzahl von Befehlen beziehen, eine Vielzahl von Sätzen von Befehlen aufweisen, und wobei verschiedene Sätze von bekannten Ausdrücken und/oder Befehlen in Abhängigkeit von der Identität des Benutzers des Küchengeräts verfügbar sind.

13. Küchengerät nach einem der vorhergehenden Ansprüche, wobei der Sensor Daten innerhalb eines vorbestimmten Bereichs in der Nähe des Küchengeräts erfasst, und/oder wobei der Sensor an einer Seitenfläche des Küchengeräts angeordnet ist.

14. Küchengerät nach einem der vorhergehenden Ansprüche, wobei das Küchengerät einen Modus aufweist, der es dem Benutzer erlaubt, Steuerungsmodi aus einer oder mehreren von Gestensteuerung, Sprachsteuerung und manueller Steuerung auszuwählen.

15. Küchengerät nach einem der vorhergehenden Ansprüche, aufweisend eine Signalsteuereinheit zur Fernsteuerung eines Küchengeräts, wobei die Signalsteuereinheit umfasst:
eine Befehlsdatenbank, die Daten in Bezug auf eine Vielzahl von Befehlen enthält, wobei jeder Befehl einer bestimmten Funktion des Küchengeräts entspricht;
eine Signaldatenbank, die Daten in Bezug auf eine Vielzahl von bekannten Signalen enthält; wobei der Sensor eine Abtasteinheit ist, die in der Signalsteuereinheit vorgesehen ist; und wobei der Prozessor
eine Verarbeitungseinheit ist, die in der Signalsteuereinheit bereitgestellt ist, wobei die Verarbeitungseinheit dazu konfiguriert ist:
das vom Benutzer durchgeführte Signal mit einem bekannten Signal unter Verwendung der erfassten Daten und der Signaldatenbank abzubilden; und
einen dem bekannten Signal zugeordneten Befehl unter Verwendung der Befehlsdatenbank zu bestimmen; und
eine Befehlsverarbeitungseinheit zum Senden des zugehörigen Befehls an das Küchengerät aufweist.

16. Küchengerät nach Anspruch 15, wobei die Signalsteuereinheit in einer intelligenten Kommunikationsvorrichtung bereitgestellt ist, wobei die intelligente Kommunikationsvorrichtung drahtlos mit dem Küchengerät kommunizieren kann.

## Revendications

1. Appareil de cuisine comprenant un mélangeur sur socle ayant une capacité de fonctionnement sans contact, le mélangeur sur socle ayant une pluralité de sorties d'entraînement incluant une sortie d'entraînement planétaire, et comprenant :
un dispositif de commande destiné à commander une opération du mélangeur sur socle ;
un détecteur destiné à capturer des données relatives à un signal comprenant un geste ou un son effectué par un utilisateur ;
une unité d'affichage configurée pour afficher une image relative au signal effectué par l'utilisateur, dans lequel le dispositif de commande est configuré pour commander l'unité d'affichage ; et
un processeur destiné à traiter les données capturées, dans lequel le processeur est configuré pour :
mettre le signal effectué par l'utilisateur en correspondance avec un signal connu en utilisant les données capturées et une base de données de signaux conservant des données relatives à une pluralité de signaux connus ;
déterminer une instruction associée au signal connu en utilisant une base de données d'instructions conservant des données relatives à une pluralité d'instructions ; et
envoyer l'instruction associée, au dispositif de commande pour commander l'opération.

2. Appareil de cuisine comprenant un grille-pain ayant une capacité de fonctionnement sans contact, le grille-pain comprenant :
un dispositif de commande destiné à commander une opération du grille-pain ;
un détecteur destiné à capturer des données relatives à un signal comprenant un geste ou un son effectué par un utilisateur ;
une unité d'affichage configurée pour afficher une image relative au signal effectué par l'utilisateur, dans lequel le dispositif de commande est configuré pour commander l'unité d'affichage ; et
un processeur destiné à traiter les données capturées, dans lequel le processeur est configuré pour :
mettre le signal effectué par l'utilisateur en correspondance avec un signal connu en utilisant les données capturées et une base de données de signaux conservant des données relatives à une pluralité de signaux connus ;
déterminer une instruction associée au signal connu en utilisant une base de données d'instructions conservant des données relatives à une pluralité d'instructions ; et
envoyer l'instruction associée, au dispositif de commande pour commander l'opération.

3. Appareil de cuisine selon la revendication 1 ou 2, dans lequel l'unité d'affichage est configurée pour afficher des fonctions disponibles de l'appareil de cuisine, et dans lequel l'instruction est une instruction parmi : un mouvement d'un curseur sur l'unité d'affichage et une sélection d'une fonction disponible.

4. Appareil de cuisine selon la revendication 3, dans lequel chaque instruction correspond à une fonction spécifique de l'appareil de cuisine.

5. Appareil de cuisine selon la revendication 1 ou la revendication 3 ou 4 quand elle dépend de la revendication 1, dans lequel la fonction est une fonction parmi : une commutation marche/arrêt d'une ou de plusieurs sorties parmi une sortie d'entraînement d'un mixeur à haute vitesse, une sortie d'entraînement de hachoir à basse vitesse et une sortie d'entraînement planétaire ; la sélection d'une vitesse d'une opération ; et la sélection d'un outil pour la sortie d'entraînement planétaire.

6. Appareil de cuisine selon la revendication 2 ou la revendication 3 ou 4 quand elle dépend de la revendication 2, dans lequel la fonction est une fonction parmi : le lancement d'un cycle de grillage de pain ; l'ajustement d'une commande de brunissage, l'arrêt d'un cycle de grillage de pain ; et la sélection d'un ou de plusieurs réglages parmi un réglage de tranche unique, un réglage de bagel, un réglage de décongélation, et un réglage de réchauffage.

7. Appareil de cuisine selon l'une quelconque des revendications précédentes, dans lequel le signal effectué par l'utilisateur comprend un son, tel qu'une instruction vocale.

8. Appareil de cuisine selon l'une quelconque des revendications 1 à 7, dans lequel le signal effectué par l'utilisateur comprend un geste, tel qu'un mouvement spécifique effectué par la main de l'utilisateur.

9. Appareil de cuisine selon la revendication 8, dans lequel la pluralité de signaux connus comprennent deux gestes ou plus parmi : un geste consistant à saluer de la main, un geste de la main en forme de cœur, un geste de la main en forme d'angle droit, un geste de doigts croisés, un geste de la main imitant la rotation d'un bouton, un geste de pouce en l'air ou d'un pouce vers le bas, un geste d'applaudissement, un geste de poussée vers l'avant, un geste de traction vers l'arrière, un geste de poussée vers le bas avec la main ouverte et un geste de poussée vers le haut avec la main ouverte.

10. Appareil de cuisine selon l'une quelconque des revendications 8 ou 9, dans lequel chaque signal dans la base de données de signaux est défini par une trajectoire de la main d'un utilisateur.

11. Appareil de cuisine selon la revendication 10, dans lequel les données relatives à une pluralité de signaux connus comprennent des données relatives à des trajectoires possibles de la main d'un utilisateur, et dans lequel le processeur est configuré pour détecter l'utilisation possible de la main d'un utilisateur et enregistrer une trajectoire de la main quand une main est détectée, dans lequel la trajectoire enregistrée est comparée avec des données relatives à des trajectoires possibles de la main d'un utilisateur pour détecter le signal connu correspondant au signal effectué par l'utilisateur.

12. Appareil de cuisine selon l'une quelconque des revendications précédentes, dans lequel les données relatives à une pluralité de signaux connus comprennent une pluralité d'ensembles d'expressions connues, et/ou les données relatives à une pluralité de commandes comprennent une pluralité d'ensembles d'instructions, et dans lequel des ensembles différents d'expressions et/ou d'instructions connues sont disponibles en fonction de l'identité de l'utilisateur de l'appareil de cuisine.

13. Appareil de cuisine selon l'une quelconque des revendications précédentes, dans lequel le détecteur capture des données dans les limites d'une région prédéterminée proche de l'appareil de cuisine, et/ou
dans lequel le détecteur est situé sur un côté latéral de l'appareil de cuisine.

14. Appareil de cuisine selon l'une quelconque des revendications précédentes, dans lequel l'appareil de cuisine a un mode qui permet à l'utilisateur de sélectionner les modes de commande parmi une ou plusieurs commandes parmi une commande gestuelle, une commande vocale et une commande manuelle.

15. Appareil de cuisine selon l'une quelconque des revendications précédentes, comprenant une unité de commande de signaux destinée à la commande à distance d'un appareil de cuisine, dans lequel l'unité de commande de signaux comprend :
une base de données d'instructions conservant des données relatives à une pluralité d'instructions, dans lequel chaque instruction correspond à une fonction spécifique de l'appareil de cuisine ;
une base de données de signaux conservant des données relatives à une pluralité de signaux connus ; dans lequel le détecteur est une unité de détection fournie dans l'unité de commande de signaux ; et dans lequel le processeur est
une unité de traitement fournie dans l'unité de commande de signaux, dans lequel l'unité de traitement est configurée pour :
mettre le signal effectué par l'utilisateur en correspondance avec un signal connu en utilisant les données capturées et la base de données de signaux ; et
déterminer une instruction associée au signal connu en utilisant la base de données d'instructions ; et comprend
une unité de traitement d'instructions destinée à envoyer l'instruction associée à l'appareil de cuisine.

16. Appareil de cuisine selon la revendication 15, dans lequel l'unité de commande de signaux est fournie dans un dispositif de communication intelligent, dans lequel le dispositif de communication intelligent peut communiquer sans fil avec l'appareil de cuisine.
